# EUROPEAN PATENT APPLICATION

(11) **EP 4 371 797 A1**
(43) Date of publication of application: **22.05.2024**
(21) Application number: 22207929.5
(22) Date of filing: 16.11.2022
(51) Int. Cl.: B60K 37/06

(54) **VISUAL INFORMATION DISPLAY**

(71) Applicant: Harman International Industries, Incorporated, Stamford, CT 06901 (US)
(72) Inventor: The designation of the inventor has not yet been filed
(74) Representative: Rummler, Felix

(57) **Abstract**

According to an aspect of the present disclosure, there is provided a system for displaying visual information in a vehicle. The system comprises a light source and a controller to control the light source to display at least first and second visual information in or through a surface in the vehicle. When the system is in a first state or configuration, the controller is operable to display the first visual information only. When the system is in a second state or configuration, the controller is operable to display the second visual information. The first and second visual information may represent different scopes of services or capabilities selected by a user, e.g., by way of purchase or subscription.

## Description

### TECHNICAL FIELD

The present invention generally relates to a system for displaying visual information in a vehicle.

### BACKGROUND OF THE INVENTION

In the information age, digital technology is integrated into many aspects of life. For example, mini-computers, digital displays and touchscreen tablets are readily accessible to people going about their daily lives, whether in their homes and offices, or while on the move. In automotive vehicles, so-called "infotainment" systems are becoming ever more common and popular, offering modern electronic amenities for the convenience and enjoyment of both drivers and passengers. Such a system may include, for example, an audio system with loudspeakers arranged at different locations in the vehicle, and interactive display devices mounted on or near the dashboard to enable the driver to operate the audio system and other elements of the infotainment system.

It is increasingly the expectation that a purchaser of a vehicle can choose from a wide variety of possible configurations for the infotainment system. This represents a challenge during manufacture, because every different configuration may require the manufacturing process to be adjusted.

Accordingly, it is desirable to provide solutions for reconciling the customer's desire to be able to choose from a variety of options and the manufacturers desire to simplify the manufacturing process.

### SUMMARY OF THE INVENTION

The present disclosure provides a system that enables different configurations for the display of visual information to be implemented in a vehicle. A selected one of the different configurations can be implemented on demand by the purchaser or user of the vehicle. The other configurations are disabled or inhibited. Thus, the manufacturer of the vehicle is enabled to produce a single system capable of implementing different user choices, thereby simplifying the manufacturing process, without restricting the user's choice.

To achieve these and other objects, there is provided a system for displaying visual information in a vehicle, the system comprising a light source; a controller to control the light source to display at least first and second visual information in or through a surface in the vehicle; wherein, when the system is in a first configuration, the controller is operable to display the first visual information only, and, when the system is in a second configuration, the controller is operable to display the second visual information.

Thus, the system is technically capable of implementing at least two different configurations for the displaying of visual information. However, in the first configuration of the system, the controller is enabled only to display the first visual information. In the first configuration, the controller cannot be operated to display the second information. In other words, in the first configuration, some of the technical capabilities are inhibited. In the second configuration, this inhibition is removed. In other words, the displaying of the second information is unlocked. Accordingly, the system is operable in at least two different modes, each mode corresponding to a configuration selectable by a user (purchaser).

For example, the first visual information may be the logo of an audio system, e.g., the name "SOUND SYSTEM". The second visual information may be the logo of an enhanced audio system, e.g., "SOUND SYSTEM PLUS". If the first configuration is enabled, the system displays "SOUND SYSTEM", e.g., in the dashboard of the vehicle. If the second configuration is enabled, the system displays "SOUND SYSTEM PLUS" instead.

The selection of the first or second configuration may be by way of purchase or subscription. Depending on the selected subscription model or payment, the logos will be updated. For example, a basic subscription means that the first visual information will be displayed ("SOUND SYSTEM"). In an enhanced subscription, the second visual information will be displayed ("SOUND SYSTEM PLUS"). However, the present disclosure is not limited to upgrading or expanding logos. The second visual information can include additional illumination, e.g., mood lighting, or other visual effects or enhancements.

The updating of the displayed visual information can be accompanied by an upgrade of an associated audio system, as described below. Also, in the same way as a service or capability can be unlocked through subscription, the service or capability can be locked again and made unavailable when the subscription expires.

In an embodiment, the system is configured to receive a control signal, and to switch from the first configuration to the second configuration in response to receipt of the control signal. In particular, the system may be configured to receive the control signal from an external source, for example by wireless communication. Thus, it is possible to change the system's configuration remotely. For example, a user may have selected a basic level of capabilities (corresponding to the first configuration) when purchasing the vehicle. During use of the vehicle, s/he may develop a desire to use enhanced capabilities. The user may then purchase an upgrade. Following completion of the purchase, the manufacturer of the vehicle can cause the control signal to be generated and transmitted to the vehicle. In response to receipt of the control signal, the system is upgraded from the first (basic) to the second (enhanced) configuration, thereby enabling the display of the second visual information (e.g. "SOUND SYSTEM PLUS") and providing enhanced audio playback or other enhanced services.

In an embodiment, the system is included in or coupled to an in-vehicle infotainment system, in particular an in-vehicle audio system, and/or an in-vehicle illumination system. In this embodiment, the first and second configurations can include different capabilities of the infotainment system. As mentioned above, the second configuration may be associated with enhanced audio playback capabilities, for example the ability to play back 3D sound. In this embodiment, the vehicle may always include the necessary hard- and software to implement enhanced audio playback, but the full capability is only used (unlocked) in the second configuration. The same applies to enhanced illumination effects in the second configuration.

In an embodiment, the system is included in or coupled to an in-vehicle audio system, wherein, in response to receipt of the control signal, the system is configured to alter one or more parameters and/or the configuration of the audio system. Accordingly, the configuration of the audio system can be remotely adjusted (e.g., enhanced) in response to a new subscription or purchase by the user.

In an embodiment, the system is included in or coupled with a user interface, UI, wherein, in response to receipt of the control signal, the system is configured to alter one or more parameters and/or the configuration of the user interface. In the first configuration, the UI can provide a basic set of options. For example, if the UI is provided to operate the audio system, it can provide options to select audio sources and adjust the volume and sound. If the user purchases or subscribes to the second (enhanced) configuration, additional options may become available, e.g., an option to select 3D sound.

In an embodiment, the controller is configured to display the first or second information at least temporarily in response to activating the system. For example, the controller can control the light source to display a logo on a dashboard of the vehicle. The logo can be displayed throughout operation of the system, or it can be displayed during a bootup phase only.

In an embodiment, the first visual information is included in the second visual information. In addition, or alternatively, the second visual information represents an altered or expanded version of the first visual information. For example, if the visual information is a logo, a first logo can be displayed to indicate that a basic service is selected and active ("SOUND SYSTEM"), whereas a second logo can be displayed to indicate that an enhanced service is selected and active ("SOUND SYSTEM PLUS").

In an embodiment, the light source comprises a light emitting diode, LED, or an array of LEDs. The system may further comprise processing means for processing, storing and/or generating visual data, and mapping means for mapping the visual data to input signals which cause the light source to generate the first or second visual information. Accordingly, the system is capable of displaying more complex information or patterns, and to generate visual effects, particularly in the second configuration.

In an embodiment, the system further comprises a component for the vehicle, the component being configured to be integrated in a dashboard, loudspeaker, pillar, roof, door, seat, ceiling or floor of the vehicle, wherein the light source and the surface are incorporated into the component. Accordingly, the system is suitable for integration into the interior surfaces of a vehicle such as a car. The system allows visual information to be displayed inside a vehicle through any surface to which the system is integrated. This enables various technical capabilities to be implemented, by allowing large portions of the spaces inside a vehicle, from the roof to the pillars and doors, wherever integration is technically feasible, to be utilized as one or more "inconspicuous" display devices. Such display devices may be used for supplying visual information, but also for lighting in an unorthodox manner, thus enhancing the overall user experience of the vehicle, particularly in the second (enhanced) configuration. In other words, as the light source, controller and any other electronic components of the system are hidden by an outer surface seamlessly incorporated into the vehicle, it is possible to provide multiple mechanical devices for displaying information and smart illumination that are only visible when they are needed, but invisible or inconspicuous when deactivated or disabled in the first configuration. This enables a clean and modern appearance that conceals unnecessary elements and reduces distractions for the drivers and passengers. Furthermore, as the display capabilities of the surfaces are not immediately obvious to the unsuspecting passenger, it can lead to an element of pleasant surprise. The messages that are displayed, from logos to titles being played by an audio system, can have an enlarged impact. The type, scope and content of the displayed information depends on the selected configuration, based on the user's purchase or subscription.

In an embodiment, the surface comprises a flexible material, a fabric material, a porous material, an acrylic material, and/or a wooden material. Thus, the surface may be suitable for the display of information by projection of light onto the surface. In addition, or alternatively, the surface comprises a pattern, in particular a pattern formed by holes in the surface. Thus, the surface may be suitable for the display of information by using through-material illumination. Displaying visual information by through-material illumination will not require high-resolution display screens, allowing a more efficient and unobtrusive in-vehicle display and lighting arrangement without reflective or high-glare surfaces, designed using traditional materials, as a means for both providing information and ambient lighting, often at the same time, that is appropriate in an automotive context. Also, sophisticated ambient lighting can be accomplished, in combination with additional capabilities involving reacting to functional sections of the vehicle, such as adapting to audio being played back. Some or all of such enhanced services and capabilities may require unlocking through subscription or purchase.

In an embodiment with through-material illumination, when the system is in the first configuration, light transmitted from the light source is not visible through the surface, and, when the system is in the second configuration, light from the light source is visible through the surface. Accordingly, the material forming the surface may be controllable to enable light passing through it, or to block light from passing through it. This may be implemented electromechanically, e.g., by operating shutters. Accordingly, the system enables locking or unlocking different physical configurations and operations of surfaces in the interior of a vehicle. This may depend on the user's subscriptions or purchases.

In addition, in an embodiment, light from the light source may be partially blocked. For example, if the second visual information represents an expanded version of the first visual information, the expansion may be made visible by adjusting the surface material in the area of the expansion (e.g., in the area where the suffix "PLUS" in the logo "SOUND SYSTEM PLUS" is to be visible), to let light from the light source pass through the material in that area.

In an embodiment, the visual information represents text and/or ambient illumination. The light from the light source can represent audio data processed at an audio system of the vehicle. For example, the light source may be used to provide mood lighting. The mood lighting may reflect the audio being played. However, these and other enhanced capabilities may be subject to the selected configuration. In particular, any such enhanced capabilities may be available only if the user unlocks the second configuration, e.g., by way of subscription or purchase.

According to another aspect, there is provided a vehicle that includes the system described above. In particular, the vehicle is an automotive vehicle. In an embodiment, the system is part of an in-vehicle infotainment system, in particular an audio system, and/or part of an in-vehicle ambient illumination system.

Thus, the system renders the vehicle adaptable and versatile. For example, a rental company or client which may not own the vehicle does not need to modify internal furniture to include permanent logos or even attach physical branding before use. No such mechanical modifications or influences are required as the present system makes it possible to switch internal appearances of the vehicle once it is turned on, based on purchases or subscriptions.

### BRIEF DESCRIPTION OF THE DRAWINGS

The features, objects, and advantages of the present disclosure will become more apparent from the detailed description set forth below when taken in conjunction with the drawings in which like reference numerals refer to the same or similar elements.
Figure 1 schematically illustrates a system according to an embodiment of the disclosure in a first mode of operation;
Figure 2 schematically illustrates a system according to the embodiment of Figure 1 in a second mode of operation; and
Figure 3 illustrates operations of a system integrated in a vehicle according to an embodiment of the disclosure.

### DESCRIPTION OF EXEMPLARY EMBODIMENTS

According to an aspect of the present disclosure, there is provided a system for displaying visual information in a vehicle. The system comprises a light source and a controller to control the light source to display at least first and second visual information in or through a surface in the vehicle. When the system is in a first state or configuration, the controller is operable to display the first visual information only. When the system is in a second state or configuration, the controller is operable to display the second visual information. The first and second visual information may represent different scopes of services or capabilities selected by a user, e.g., by way of purchase or subscription.

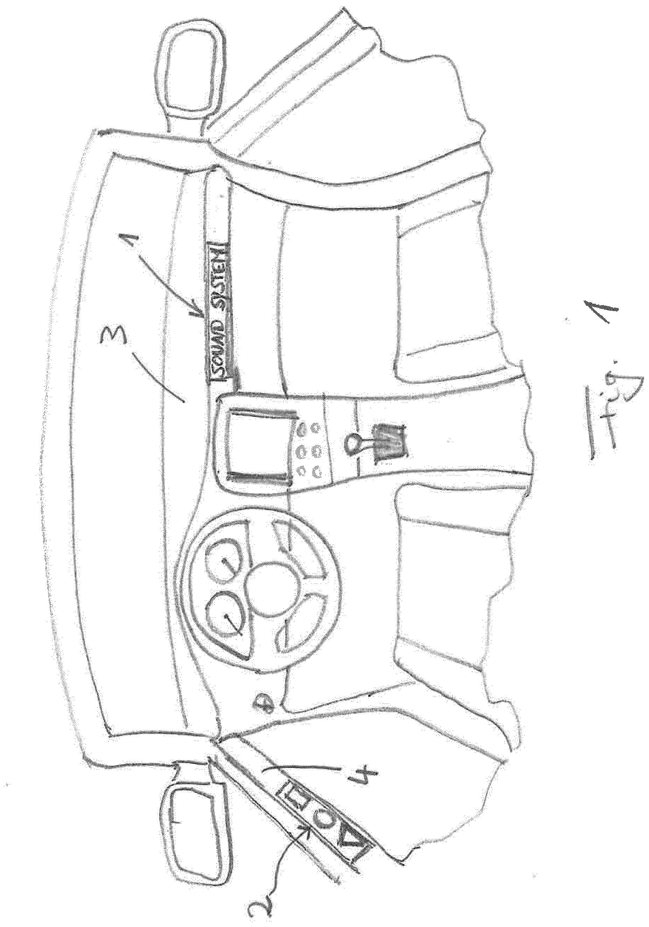

Figure 1 illustrates a cockpit of a car in which a system according to an embodiment of the present disclosure is integrated. In the illustrated example, the system provides visual information 1 and 2 on a dashboard 3 and on a panel 4 of the driver's door, respectively. The visual information 1 is represented by the exemplary name "SOUND SYSTEM". The visual information 2 is represented by three exemplary symbols. These representations are exemplary only and chosen for simplicity.

The visual information 1 and 2 can be displayed by projecting light from light sources (not shown) onto the corresponding surfaces of the dashboard 3 and the panel 4, respectively. Alternatively, the visual information 1 and 2 can be displayed by way of back illumination in the dashboard 3 and the panel 4, respectively.

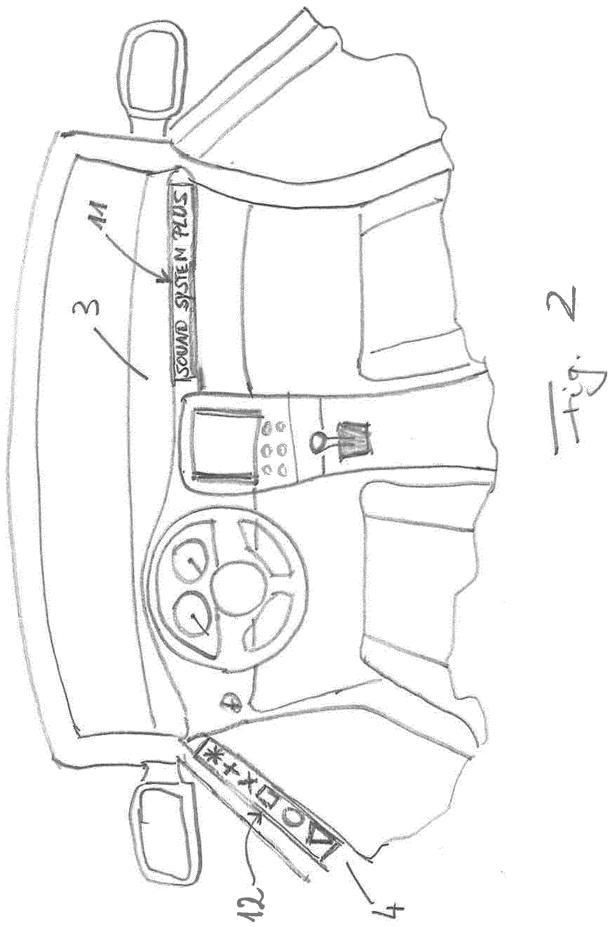

Figure 2 shows the cockpit of Figure 1 when different, expanded visual information 10 and 11 is displayed on the dashboard 3 and the panel 4, respectively. The expanded visual information 10 and 11 is represented by a suffix in the logo on the dashboard 3 and additional symbols on the panel 4. Again, these representations are exemplary only and chosen for simplicity.

The expanded visual information 10 and 11 corresponds to an enhanced configuration of the system. The enhanced configuration can be unlocked by way of subscription or purchase. The enhanced configuration can encompass different (expanded) visual information only. However, in embodiments of the present disclosure, the enhanced configuration also encompasses an expansion of functions of in-vehicle systems, e.g., an in-vehicle audio system.

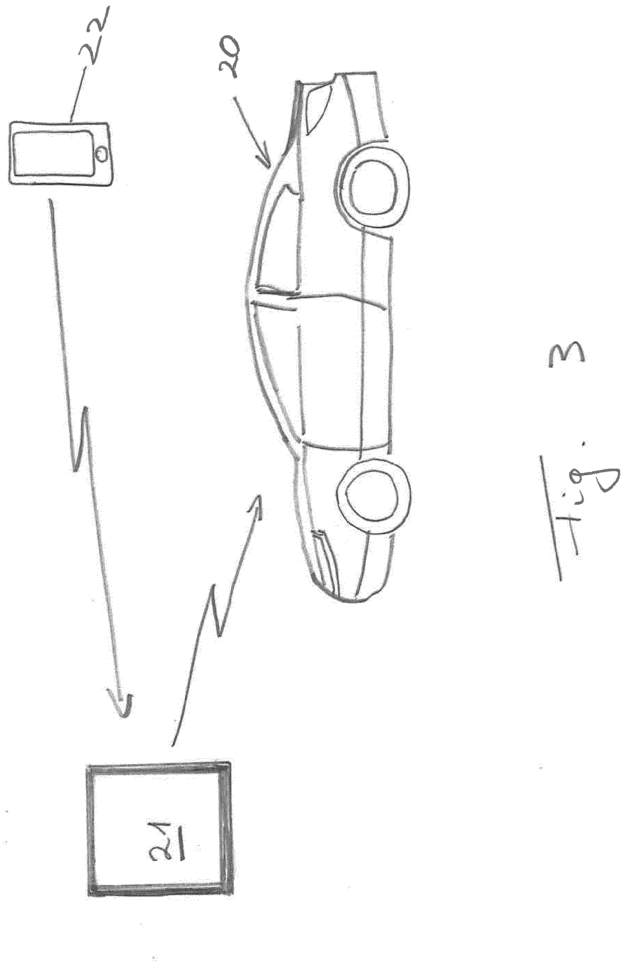

Figure 3 illustrates an operation of the system in accordance with an embodiment of the present disclosure. In this example, the system is integrated in a vehicle 20. The vehicle 20 is communicatively coupled to a remote server 21. The remote server 21 may be operated by the manufacturer of the vehicle 20. The remote server 21 stores information related to the operation of the vehicle 20. In particular, the remote server 21 stores information on purchases and subscriptions by the user, owner or operator of the vehicle 20. Depending on the purchases and subscriptions, the system is in a basic configuration or an enhanced configuration. There may be any number of enhanced configurations, each associated with different functions and services. The vehicle 20 is configured to be capable of performing any of these functions or services. However, only selected ones of the functions or services are enabled or unlocked and made available to the user, depending on the purchases and subscriptions.

Figure 3 also illustrates a mobile phone 22 of a user of the vehicle 20. The mobile phone 22 can be used to access the server 21 in order to make a new purchase or subscription. In response to such new purchase or subscription, the server 21 transmits a control signal to the vehicle 20. In response to receipt of the control signal from the server 21, the system changes to a new configuration. For example, the user may have changed from a standard subscription to an enhanced subscription which is associated with additional functions and services. In particular, the additional functions and services may involve enhanced audio playback, e.g., including 3D sound. The additional functions and services may be represented by a different, expanded logo, such as "SOUND SYSTEM PLUS" instead of "SOUND SYSTEM" for the basic subscription. Accordingly, in response to receipt of the control signal from the server 21, the system adjusts the display of visual information. In particular, system may adjust the display of visual information from the example shown in Figure 1 to the example shown in Figure 2.

The description of embodiments and aspects has been presented merely for purposes of illustration and explanation. Suitable modifications and variations to the embodiments and aspects may be performed in light of the above, and different embodiments and aspects may be combined where possible and appropriate, without departing from the scope of protection as determined by the claims.

## Claims

1. A system for displaying visual information in a vehicle, the system comprising:
a light source;
a controller to control the light source to display at least first and second visual information in or through a surface in the vehicle;
wherein, when the system is in a first configuration, the controller is operable to display the first visual information only, and, when the system is in a second configuration, the controller is operable to display the second visual information.

2. The system of claim 1, wherein the system is configured to receive a control signal, and to switch from the first configuration to the second configuration in response to receipt of the control signal.

3. The system of claim 2, wherein the system is configured to receive the control signal from an external source, in particular by wireless communication.

4. The system of any preceding claim, wherein the system is included in or coupled to an in-vehicle infotainment system, in particular an in-vehicle audio system, and/or an in-vehicle illumination system.

5. The system of any preceding claim, wherein the system is included in or coupled to an in-vehicle audio system, and wherein, in response to receipt of the control signal, the system is configured to alter one or more parameters and/or the configuration of the audio system.

6. The system of any preceding claim, wherein the system is included in or coupled with a user interface, UI, wherein, in response to receipt of the control signal, the system is configured to alter one or more parameters and/or the configuration of the user interface.

7. The system of any preceding claim, wherein the controller is configured to display the first or second information at least temporarily in response to activating the system.

8. The system of any preceding claim, wherein the first visual information is included in the second visual information, and/or wherein the second visual information represents an altered or expanded version of the first visual information.

9. The system of any preceding claim, wherein the light source comprises a light emitting diode, LED, or an array of LEDs.

10. The system of any preceding claim, further comprising processing means for processing, storing and/or generating visual data, and mapping means for mapping the visual data to input signals which cause the light source to generate the first or second visual information.

11. The system if any preceding claim, further comprising a component for the vehicle, the component being configured to be integrated in a dashboard, loudspeaker, pillar, roof, door, seat, ceiling or floor of the vehicle, wherein the light source and the surface are incorporated into the component.

12. The system of claim 11, wherein the surface is configured for through-material illumination, wherein, when the system is in the first configuration, light transmitted from the light source is not visible through at least part of the surface of the component, and when the system is in the second configuration, light from the light source is visible through the surface.

13. The system of claim 11 or 12, wherein the surface comprises a flexible material, a fabric material, a porous material, an acrylic material, and/or a wooden material, and/or wherein the surface comprises a pattern, in particular a pattern formed by holes in the surface.

14. The system of any preceding claim, wherein the visual information represents text and/or ambient illumination, and preferably wherein the light from the light source represents audio data processed at an audio system of the vehicle.

15. A vehicle comprising the system of any preceding claim, preferably wherein the vehicle is an automotive vehicle, and preferably wherein the system is part of an in-vehicle infotainment system, in particular an audio system, and/or part of an in-vehicle ambient illumination system.
